# EUROPÄISCHE PATENTSCHRIFT

(11) **EP 2 989 424 B1**
(45) Veröffentlichungstag und Bekanntmachung des Hinweises auf die Patenterteilung: **11.05.2022**
(21) Anmeldenummer: 14709916.2
(22) Anmeldetag: 07.03.2014
(51) Int. Cl.: B60H 1/00, H04H 20/62, G01C 21/36, B60Q 3/18, H04W 4/14, G01C 21/34

(54) **VERFAHREN ZUR KOMMUNIKATION ZWISCHEN EINEM SENDER UND EINEM FAHRZEUG SOWIE ENTSPRECHENDE VORRICHTUNG**
PROCEDURE FOR COMMUNICATION BETWEEN A SENDER AND A VEHICLE AND DEVICE THEREFOR
PROCÉDURE ET DISPOSITIF POUR COMMUNICATION ENTRE UN ÉMETTEUR ET UN VÉHICULE

(30) Priorität: 23.04.2013 DE 102013007055
(43) Veröffentlichungstag der Anmeldung: 02.03.2016
(73) Patentinhaber: Volkswagen Aktiengesellschaft, 38440 Wolfsburg (DE)
(72) Erfinder: HELMHOLD, Lennart, 38102 Braunschweig (DE); KLAAS, Michael, 38179 Schwülper (DE); GERLACH, Simon, 38527 Meine (DE)
(86) Internationale Anmeldenummer: PCT/EP2014/054457
(87) Internationale Veröffentlichungsnummer: WO 2014/173580

(56) Entgegenhaltungen:
- EP-A1- 1 128 627
- WO-A1-02/29756
- WO-A1-2012/105889
- DE-A1- 19 857 771
- DE-A1-102006 034 413
- DE-A1-102006 051 228
- US-A1- 2003 014 767
- US-A1- 2004 203 696
- US-A1- 2008 036 586

## Beschreibung

Die vorliegende Erfindung betrifft ein Verfahren und eine Vorrichtung, um zwischen einem Fahrzeug und einem Sender (beispielsweise einem weiteren Fahrzeug) zu kommunizieren.

Die DE 10 2006 051 228 A1 offenbart eine fernunterstützte Navigation. Dazu werden an ein Telekommunikationsgerät von einer entfernten Stelle zur Navigation nutzbare Adressdaten in Form einer SMS versandt. Eine Navigation wird zu einem durch die Adressdaten spezifizierten Ziel gestartet.

Die US 2004/203696 A1 beschreibt ein Hochladen von Daten für ein Fahrzeug. Dabei kann das Fahrzeug eine SMS empfangen, abhängig von der SMS einen Vorgang ausführen und eine Antwort-SMS zurück zu einem Call-Center schicken.

Die WO 02/29756 A1 offenbart das Senden von individuellen Daten zu einem Kraftfahrzeug. Dabei können Daten, wie die Adresse eines Zielortes, als eine Kurznachricht von einem Service-Center an eine elektronische Komponente des Kraftfahrzeugs, z.B. ein Navigationssystem, übertragen werden.

Die DE 198 57 771 A1 beschreibt ein Fahrzeugzuteilungsverfahren. Dabei wird aufgrund einer Anfrage von einem Endgerät an eine Zentrale eine Zusatzinformation, z.B. Fahrzeugdaten, an das Endgerät übermittelt.

Die US 2008/036586 A1 beschreibt die Übertragung von Navigationsdaten an ein Navigationssystem eines Fahrzeugs. Dabei wird eine SMS von einem Mobilgerät innerhalb des Fahrzeugs empfangen und eine in der SMS enthaltene Adresse in das Navigationssystem eingespeist.

Die US 2003/014767 A1 betrifft ein Erzeugen und Empfangen von personalisierten Sendungen. Dabei kann eine Playlist als SMS an einen Empfänger übertragen werden, welcher dann den Inhalt von Kanälen daraufhin untersucht, ob einer davon mit der Auswahl in der Playlist übereinstimmt, um dann das entsprechende Programm einzustellen.

Die EP 1 128 627 A1 offenbart eine Kommunikationsverbindung zwischen einem Fahrzeug und einem Server. Dabei wird eine SMS an das Fahrzeug übertragen, die eine Identifikation einer auszuführenden Operation umfasst. Beispiele für eine solche auszuführende Operation sind ein Einstellen einer Klimaanlage des Fahrzeugs und ein Verhindern, dass der Motor des Fahrzeugs gestartet wird.

Die DE 10 2006 034 413 A1 beschreibt die Bestimmung eines gemeinsamen Treffpunkts für zwei Navigationssysteme. Dabei ermittelt ein Server ausgehend von den Standorten der Navigationssysteme den gemeinsamen Treffpunkt und übermittelt diesen an die Navigationssysteme.

Die WO 2012/105889 A1 offenbart eine Kommunikation zwischen Fahrzeugen in einem Fahrzeugzug, um Informationen über das jeweilige Gewicht, eine Ausgangsleistung und ein Ziel auszutauschen. Dadurch kann beispielsweise die Relativgeschwindigkeit zwischen zwei Fahrzeugen im Fahrzeugzug eingestellt werden. Fahrzeugzuginformationen z.B. an einen Spediteur können per SMS übertragen werden.

Bekannte Infotainmentsystem von Fahrzeugen bieten die Möglichkeit, Fahrzeugdaten beispielsweise über soziale Netze zu versenden. Dadurch ist es beispielsweise möglich, eine Nachricht, wie "Ich bin in München und es ist 10 °C", ohne großen Aufwand zu versenden.

Darüber hinaus existieren Navigations-Applikationen, beispielsweise für das iPhone, mit welchen Ankunftszeiten mit Hilfe von Nachrichten über soziale Netze versendet werden können.

Fahrzeugflottenbetreiber oder Nutzfahrzeuge versenden Fahrzeugdaten an ein Backend, in welchem anschließend eine Aufbereitung oder Auswertung dieser Fahrzeugdaten vorgenommen wird.

Die US 2010/0123737 A1 beschreibt die Übertragung einer Ortsangabe in Form einer URL von einem Mobilgerät an ein anderes Mobilgerät per E-Mail oder SMS.

Die US 2012/0225677 A1 offenbart die Synchronisierung einer Information zwischen einem Mobilgerät und einem Fahrzeug.

Die vorliegende Erfindung stellt sich die Aufgabe, die Kommunikation zwischen einem Sender und einem Fahrzeug dahingehend zu verbessern, dass eine von dem Sender an das Fahrzeug gesendete Information in einer im Vergleich zum Stand der Technik einfacheren Weise weiter verwendet werden kann, um insbesondere Betriebskosten und Einrichtungskosten für den Fahrzeughersteller zu senken.

Erfindungsgemäß wird diese Aufgabe durch ein Verfahren zur Kommunikation nach Anspruch 1, durch ein Verfahren zum Versenden einer Information nach Anspruch 5, durch ein Verfahren zum Empfangen einer Information nach Anspruch 6 und durch eine Vorrichtung für ein Fahrzeug nach Anspruch 7 gelöst. Die abhängigen Ansprüche definieren bevorzugte und vorteilhafte Ausführungsformen der vorliegenden Erfindung.

Im Rahmen der vorliegenden Erfindung wird ein Verfahren zur Kommunikation zwischen einem Fahrzeug und einem Sender (beispielsweise (in) einem weiteren Fahrzeug) bereitgestellt. Dabei umfasst das erfindungsgemäße Verfahren zur Kommunikation folgende Schritte:
- Senden einer Information in Form einer Textnachricht, wobei die Information (zumindest teilweise) in maschinenlesbarer Form vorliegt, von dem Sender (z.B. Mobilfunksender, Internet-Server) an das Fahrzeug. Die Textnachricht wird dabei insbesondere über einen Standard-Kommunikationsmechanismus (z. B. SMS, iMessage, Twitter, E-Mail, Facebook, Instant Messenger wie Whats App, ICQ, usw.) über ein Mobilfunknetz von dem Sender an das Fahrzeug übertragen. Die Textnachricht, deren Versendung üblicherweise von einem Fahrzeuginsassen initiiert wird, kann dabei auch menschenerfassbare Informationen umfassen.
- Empfangen und Auswerten der Information von dem Fahrzeug. Das Fahrzeug empfängt die Information und wertet die Information aus, um sie anschließend weiter zu verarbeiten.
- Automatisches Ausführen einer Anwendung des Fahrzeugs abhängig von der Information. Dabei werden Fahrzeugdaten des Fahrzeugs erfasst und als die Information versendet. Unter den Fahrzeugdaten werden Einstellungsdaten und Konfigurationsdaten zur Einstellung bzw. Konfiguration eines Infotainmentsystems, einer Klimaanlage oder eines Sonnendachs des Fahrzeugs verstanden. Insbesondere wird ausgehend von der Information eine bestimmte Anwendung des Fahrzeugs (z. B. Starten des Navigationssystems, Öffnen des Verdecks oder Einstellen eines

Radiosenders) ermittelt und ausgeführt. Die Ausführung der Anwendung kann dabei zusätzlich abhängig von einer positiven Bestätigung beispielsweise des Fahrers des Fahrzeugs vorgenommen werden.

Das erfindungsgemäße Verfahren zur Kommunikation umfasst folgende Varianten:
- Gemäß einer bevorzugten Variante wird die Textnachricht mittels eines Mobilfunkgeräts (z.B. Smartphones) versendet und empfangen, welches über einen Datenkanal mit dem Fahrzeug kommunikationstechnisch gekoppelt ist und den Standard-Kommunikationsmechanismus z.B. durch entsprechende Applikationen von Haus aus unterstützt. Der Datenkanal kann wiederum mittels proprietärer Technologien aufgebaut werden.
- Gemäß einer weiteren Variante umfasst das Fahrzeug selbst eine Kommunikationseinrichtung und ist somit selbst in der Lage, mit einem Mobilfunkgerät außerhalb des Fahrzeugs oder mit einer weiteren Kommunikationseinrichtung eines weiteren Fahrzeugs zu kommunizieren.

Das erfindungsgemäße Verfahren zur Kommunikation ermöglicht vorteilhafterweise, dass die von dem Sender an das Fahrzeug (z.B. mit Hilfe des Mobilfunkgeräts) in Form einer Textnachricht gesendete Information von dem Fahrzeug automatisch weiterverarbeitet werden kann. Dadurch ist es beispielsweise nicht mehr erforderlich, dass der Fahrer des Fahrzeugs die entsprechende Information der Textnachricht entnehmen muss, um sie dann beispielsweise dem Infotainmentsystem seines Fahrzeugs manuell einzugeben, in welchem die Information dann entsprechend weiterverarbeitet wird.

Gemäß einer beispielhaften Ausführungsform der Erfindung kann die Information eine Ortsangabe (z.B. in Form von Geokoordinaten) umfassen, welche automatisch in einem Navigationssystem des Fahrzeugs abgespeichert wird. Abhängig von dieser Ortsangabe wird dann gemäß dieser Ausführungsform eine Route für das Fahrzeug bestimmt.

Durch diese erfindungsgemäße Ausführungsform ist es beispielsweise möglich, dass von einem weiteren Fahrzeug der aktuelle Standort oder das im Navigationssystem des weiteren Fahrzeugs eingestellte Fahrtziel per Textnachricht an das Fahrzeug übermittelt wird und dass das Navigationssystem des Fahrzeugs automatisch (unter Umständen nach Bestätigung des Fahrers) eine Route für das Fahrzeug zu diesem Standort bestimmt.

Gemäß einer weiteren erfindungsgemäßen Ausführungsform umfasst die Information eine Senderangabe eines Radiosenders. Dabei wird in einem Radio des Fahrzeugs nach Empfang der Textnachricht automatisch (unter Umständen nach Bestätigung des Fahrers) der entsprechende Radiosender eingestellt.

Die weitere erfindungsgemäße Ausführungsform ermöglicht es, dass der Fahrer eines weiteren Fahrzeugs seinen aktuell eingestellten Radiosender per Textnachricht an das Fahrzeug übermittelt und das Radiosystem des Fahrzeugs automatisch denselben Sender einstellt.

Im Rahmen der vorliegenden Erfindung wird auch ein Verfahren zum Versenden der Information eines Fahrzeugs bereitgestellt. Dieses Verfahren zum Versenden umfasst folgende Schritte:
- Erfassen der Information von dem Fahrzeug bzw. einer bestimmten Einrichtung des Fahrzeugs.
- Kodieren der Information in maschinenlesbarer Form in eine Textnachricht. Die Information wird insbesondere derart in der prinzipiell auch vom Menschen lesbaren Textnachricht hinterlegt, so dass die Information von einer Maschine bzw. automatisch aus dieser Textnachricht erfasst werden kann.
- Versenden der Textnachricht über ein Mobilfunknetz.

Dabei werden Fahrzeugdaten des Fahrzeugs erfasst und als die Information versendet. Unter den Fahrzeugdaten werden Einstellungsdaten und Konfigurationsdaten zur Einstellung bzw. Konfiguration eines Infotainmentsystems, einer Klimaanlage oder eines Sonnendachs des Fahrzeugs verstanden.

Das erfindungsgemäße Verfahren zum Versenden kann beispielsweise als Applikation(en) (Apps) in einem Mobilfunkgerät (Smartphone) ausgeführt werden, welches kommunikationstechnisch mit dem Fahrzeug oder einer bestimmten Einrichtung des Fahrzeugs gekoppelt ist. Dadurch muss das Fahrzeug bzw. eine bestimmte Einrichtung des Fahrzeugs nur die Information bereitstellen, während die Kodierung und das Versenden der Information in Form der Textnachricht von dem Mobilfunkgerät durchgeführt werden.

Das Kodieren der Information in die Textnachricht kann dabei mit Hilfe eines Hyperlinks realisiert werden. Dazu wird die Information in Form eines Hyperlinks oder in einen Hyperlink kodiert, welcher an einer bestimmten Stelle in die Textnachricht eingebettet wird. Darüber hinaus kann das Versenden der Textnachricht mit Hilfe eines Standard-Kommunikationsmechanismus, welcher aus anderen Gründen bereits Bestandteil des Mobilfunkgeräts ist, durchgeführt werden. Die Realisierung des erfindungsgemäßen Verfahrens zum Versenden mit Hilfe der Hyperlink-Technik und mit Hilfe eines Standard-Kommunikationsmechanismus weist den Vorteil auf, dass etablierte Mechanismen eingesetzt werden.

Im Rahmen der vorliegenden Erfindung wird auch ein Verfahren zum Empfangen der Information für ein Fahrzeug bereitgestellt. Dabei umfasst das Verfahren zum Empfangen folgende Schritte:
- Empfangen der Textnachricht über ein Mobilfunknetz.
- Dekodieren der Textnachricht, um die in maschinenlesbarer Form innerhalb der Textnachricht hinterlegte Information zu erfassen.
- Weiterleiten der Information an das Fahrzeug bzw. eine Einrichtung des Fahrzeugs, so dass abhängig von der Information automatisch eine Anwendung des Fahrzeugs durchgeführt wird.

Dabei umfasst die Information Fahrzeugdaten eines weiteren Fahrzeugs. Unter den Fahrzeugdaten werden Einstellungsdaten und Konfigurationsdaten zur Einstellung bzw. Konfiguration eines Infotainmentsystems, einer Klimaanlage oder eines Sonnendachs des weiteren Fahrzeugs verstanden.

Auch das erfindungsgemäße Verfahren zum Empfangen kann als Applikation(en) (Apps) eines Mobilfunkgeräts durchgeführt werden, welches kommunikationstechnisch mit dem Fahrzeug oder einer entsprechenden Einrichtung des Fahrzeugs gekoppelt ist. Das Fahrzeug bzw. die entsprechende Einrichtung des Fahrzeugs nimmt in diesem Fall die Information von dem Mobilfunkgerät entgegen, um abhängig von der Information die Anwendung des Fahrzeugs zu aktivieren. Vorteilhafterweise ist es bei dieser Variante vorteilhafterweise nicht nötig, dass das Fahrzeug oder eine Einrichtung des Fahrzeugs die Textnachricht über Mobilfunk empfangen und dekodieren muss.

Das Empfangen der Textnachricht über Mobilfunk kann dabei mit einem Standard-Kommunikationsmechanismus, welcher bereits aus anderen Gründen auf dem Mobilfunkgerät installiert ist, durchgeführt werden. Darüber hinaus kann das Dekodieren der Textnachricht ein automatisches Erfassen eines Hyperlinks innerhalb der Textnachricht und ein Interpretieren dieses Hyperlinks, um dadurch die Information zu extrahieren, umfassen. Wiederum weist die Realisierung des erfindungsgemäßen Verfahrens zum Empfangen mittels Hyperlink-Technik und Standard-Kommunikationsmechanismus den Vorteil auf, dass etablierte Mechanismen eingesetzt werden, so dass die Realisierung vereinfacht wird.

Die vorliegende Erfindung könnte auch in Form eines Mobilfunkgeräts realisiert werden, wobei dieses Mobilfunkgerät ausgestaltet ist, um das erfindungsgemäße Verfahren zum Versenden und/oder das erfindungsgemäße Verfahren zum Empfangen durchzuführen. In diesem Fall würde das entsprechende erfindungsgemäße Verfahren in Form einer oder mehrerer Applikationen (Apps) auf dem Mobilfunkgerät installiert sein.

Im Rahmen der vorliegenden Erfindung wird auch eine Vorrichtung für ein Fahrzeug bereitgestellt, welche eine Steuerung umfasst. Dabei ist die Steuerung ausgestaltet, um über eine Kommunikationseinrichtung Textnachrichten zu empfangen, wobei die Textnachrichten insbesondere über einen Standard-Kommunikationsmechanismus empfangen werden. Darüber hinaus ist die Steuerung ausgestaltet, um eine Information in Form einer Textnachricht in maschinenlesbarer Form mit Hilfe der Kommunikationseinrichtung zu empfangen und auszuwerten und um abhängig von der Information eine Anwendung des Fahrzeugs durchzuführen. Die erfindungsgemäße Vorrichtung kann eingerichtet sein, um zusätzlich eine menschenverwertbare Information in der Textnachricht zu erfassen und so auszugeben, dass die Information von einem Menschen aufgenommen wird. Dabei umfasst die Information Fahrzeugdaten eines weiteren Fahrzeugs. Unter den Fahrzeugdaten werden Einstellungsdaten und Konfigurationsdaten zur Einstellung bzw. Konfiguration eines Infotainmentsystems, einer Klimaanlage oder eines Sonnendachs des weiteren Fahrzeugs verstanden.

Die Vorteile der erfindungsgemäßen Vorrichtung entsprechen im Wesentlichen den Vorteilen der erfindungsgemäßen Verfahren, welche vorab im Detail ausgeführt sind, so dass hier auf eine Wiederholung verzichtet wird.

Die erfindungsgemäße Vorrichtung kann auch zur Durchführung der erfindungsgemäßen Verfahren ausgestaltet sein. Dies gilt auch für alle im Folgenden genannten Ausführungsformen der erfindungsgemäßen Vorrichtung.

Darüber hinaus kann die Steuerung ausgestaltet sein, um über die Kommunikationseinrichtung Textnachrichten zu versenden. In diesem Fall ist die erfindungsgemäße Vorrichtung in der Lage, die Information in Form der Textnachricht in maschinenlesbarer Form zu hinterlegen und die Textnachricht mit Hilfe der Kommunikationseinrichtung beispielsweise an ein anderes Fahrzeug zu versenden.

Bei dieser Ausführungsform ist die Vorrichtung nicht nur in der Lage, eine entsprechende Textnachricht zu empfangen und abhängig davon die entsprechende Anwendung des Fahrzeugs auszuführen, sondern darüber hinaus in der Lage, die entsprechende Textnachricht selbst zu erstellen und zu versenden, so dass ein weiteres Fahrzeug, welches ebenfalls mit der erfindungsgemäßen Vorrichtung ausgestaltet ist, bei Empfang der Textnachricht die entsprechende Anwendung automatisch starten kann.

Erfindungsgemäß existieren zwei Varianten:
- Die Vorrichtung umfasst selbst die Kommunikationseinrichtung und ist somit selbst in der Lage, mit einem anderen Mobilfunkgerät (beispielsweise in einem anderen Fahrzeug) zu kommunizieren.
- Gemäß einer bevorzugten Variante ist die Vorrichtung ausgestaltet, um sich kommunikationstechnisch mit der Kommunikationseinrichtung (beispielsweise mit einem sich im Fahrzeug befindenden Mobilfunkgerät) zu koppeln und um mittels dieser Kommunikationseinrichtung die Textnachrichten zu senden oder zu empfangen. Die Kopplung zwischen der Vorrichtung und der Kommunikationseinrichtung kann dabei drahtgestützt oder drahtlos (z. B. Bluetooth) erfolgen.

Bei der zweiten bzw. bevorzugten Variante kann auch die Erzeugung der Textnachricht inklusive der entsprechenden Kodierung der Information in der Textnachricht (z.B. in Form eines in der Textnachricht enthaltenen Hyperlinks) von dem Mobilfunkgerät (durch eine auf dem Mobilfunkgerät ablaufende Applikation) vorgenommen werden, so dass in diesem Fall die Steuerung dem Mobilfunkgerät nur die Information übermittelt (vergleiche erfindungsgemäßes Verfahren zum Versenden). Darüber hinaus ist es möglich, dass das Mobilfunkgerät auch beim Empfang der Textnachricht (durch eine auf dem Mobilfunkgerät ablaufende Applikation) die Textnachricht dekodiert oder interpretiert, um insbesondere die Information aus dem Hyperlink zu extrahieren. In diesem Fall erhält die Steuerung nur die Information von dem Mobilfunkgerät (vergleiche erfindungsgemäßes Verfahren zum Empfangen).

Mit anderen Worten kann die vorliegende Erfindung entsprechend der zweiten bzw. bevorzugten Variante auch in Form eines Systems realisiert werden, welches neben der erfindungsgemäßen Vorrichtung ein Mobilfunkgerät umfasst. Auf diesem Mobilfunkgerät könnten dann das erfindungsgemäße Verfahren zum Versenden und das erfindungsgemäße Verfahren zum Empfangen als Applikation(en) ablaufen.

Insbesondere ist die Steuerung eingerichtet, um abhängig von der Information (durch die Ausführung der Anwendung) eine Zustandsänderung des Fahrzeugs (insbesondere eine Änderung einer Konfiguration oder Einstellung des Fahrzeugs oder einer Einrichtung (z.B. Klimaanlage, Motorsteuerung, Getriebe) des Fahrzeugs) zu bewirken.

Die Änderung eines Zustands des Fahrzeugs kann dabei als die Änderung eines beliebigen sichtbaren oder unsichtbaren Status des Fahrzeugs (z.B. die Änderung eines Zustands, welcher das Fahrverhalten des Fahrzeugs verändert) angesehen werden. Beispiele eines entsprechenden Zustands, welcher durch die Ausführung der Anwendung geändert wird, sind: Sportmodus des Fahrzeugs an oder aus, Einstellung der Sollgeschwindigkeit des Tempomats des Fahrzeugs, Einstellung des aktuellen Ziels des Navigationssystems, usw.

Darüber hinaus kann die Steuerung eingerichtet sein, Fahrzeugdaten des Fahrzeugs und/oder Daten einer Fahrt des Fahrzeugs zu erfassen und als die Information in Form der Textnachricht zu versenden. Dabei ist die Steuerung weiter eingerichtet, um als die Information Fahrzeugdaten eines weiteren Fahrzeugs und/oder Daten bezüglich einer Fahrt des weiteren Fahrzeugs zu empfangen auszuwerten.

Unter den Fahrzeugdaten werden alle das Fahrzeug betreffenden Daten verstanden, wie Einstellungsdaten und Konfigurationsdaten zur Konfiguration bzw. Einstellung des Fahrzeugs oder einer Einrichtung (Infotainmentsystem, Klimaanlage, Sonnendach) des Fahrzeugs. Die Daten bezüglich der Fahrt des Fahrzeugs umfassen beispielsweise den aktuellen Standort des Fahrzeugs, das dem Navigationssystem vorgegebene Ziel der von dem Fahrzeug befahrenen Route und interessante Orte auf der von dem Fahrzeug befahrenen Route.

Die Steuerung ist insbesondere ausgestaltet, um die Information in Form eines Hyperlinks zu kodieren und um diesen Hyperlink in die Textnachricht einzubetten.

Beim Einsatz von Hyperlinks existieren die folgenden zwei Varianten:
- Die Information wird in Form einer Datei hinterlegt, wobei der eigentliche Hyperlink einen Verweis auf diese Datei bereitstellt. Bei dieser Variante kann sich die Datei beispielsweise auf einem externen Server befinden.
- Die Information wird direkt im Hyperlink, insbesondere in einer URL ("Uniform Resource Locator"), hinterlegt.

Obwohl erfindungsgemäß beide Varianten des Hyperlinks möglich sind, wird die zweite Variante bevorzugt. Da bei der zweiten Variante die Information direkt selbst im Hyperlink hinterlegt wird, ist die die zweite Variante vorteilhafterweise nicht auf weitere externe Datenquellen angewiesen.

Wenn bestimmte Applikationen des Fahrzeugs, welche insbesondere auf dem Mobilfunkgerät laufen, auf bestimmte Hyperlinktypen (Pseudoprotokolle) registriert sind, kann mit Hilfe des Hyperlinks, z.B. durch ein Selektieren (Anklicken) des Hyperlinks, die entsprechende Applikation, welche für den Typ des Hyperlinks registriert ist, gestartet werden. Der Hyperlink und die darin kodierte Information können dann von dieser Applikation ausgewertet werden.

Beispielsweise kann sich eine Applikation des Fahrzeugs namens CarControl auf das Pseudoprotokoll "Car" registrieren. Umfasst nun die von der erfindungsgemäßen Vorrichtung per SMS oder E-Mail empfangene Textnachricht die URL "car://blink?time=10&frequency=2", startet die erfindungsgemäße Vorrichtung bei der Auswertung der Textnachricht aufgrund des Schlüsselworts "Car" die für dieses Protokoll registrierte Applikation CarControl und übergibt dieser Applikation die URL als Parameter. Die Applikation CarControl analysiert (parst) die URL und veranlasst darauf hin, dass das Fahrzeug für 10 Sekunden mit einer Frequenz von 2 Hz blinkt.

Bei der Registrierung einer Applikation auf ein bestimmtes Pseudoprotokoll wird insbesondere ein Standard-Mechanismus der API (Application Programming Interface bzw. Programmschnittstelle) des Mobilfunkgeräts eingesetzt. Wann immer ein Hyperlink in einer Textnachricht (z.B. in einer EMail, SMS, Whats-App-Nachricht) in einer Standard-Nachrichten-App erfasst wird und eine Applikation für das im Hyperlink verwendete Protokoll registriert ist, wird diese Applikation beim Selektieren bzw. Anklicken des Hyperlinks durch das Betriebssystem des Mobilfunkgeräts gestartet.

Ein anderes Beispiel wäre das Versenden eines Hyperlinks/URL "car://setmode?sport=1", was beim Empfänger dafür sorgen könnte, dass sein Fahrzeug in einen Sportmodus geschaltet wird.

Das Hinterlegen der Information in Form eines Hyperlinks bietet somit die Möglichkeit, automatisch eine beliebige Anwendung bzw. Applikation des Fahrzeugs (insbesondere mittels eines Mobilfunkgeräts, auf welchem diese Applikation läuft und welches entsprechende Steuerbefehle an das Fahrzeug sendet) mit einem beliebigen Parametersatz, der ebenfalls in dem Hyperlink hinterlegt ist, zu starten. Dadurch ist es möglich, dass abhängig von der empfangenen Textnachricht eine beliebige Konfigurationseinstellung des Fahrzeugs oder einer Einrichtung des Fahrzeugs automatisch vorgenommen werden kann, ohne dass der Mensch (insbesondere der Fahrer) die Textnachricht in irgendeiner Weise umsetzen muss, wie es nach dem Stand der Technik der Fall ist.

Obwohl das direkte Hinterlegen der Information in dem Hyperlink bevorzugt wird, ist es erfindungsgemäß auch möglich, lediglich eine Identifikation als Information in der Textnachricht zu hinterlegen und weitere Informationen unter dieser Identifikation in einem Webdienst abzuspeichern, von welchem sie dann von der erfindungsgemäßen Vorrichtung bei Empfang der Textnachricht mit Hilfe der in der Textnachricht enthaltenen Identifikationsnummer abgerufen werden. Bei dieser Identifikation handelt es sich insbesondere um eine eindeutige Bezeichnung (z.B. eine Identifikationsnummer oder ein Identifikationsstring), welche in einem Hyperlink kodiert werden kann und unter welcher dann die Information abgerufen werden kann.

Gemäß einer bevorzugten erfindungsgemäßen Ausführungsform umfasst die Vorrichtung eine Ausgabeeinrichtung, um eine weitere Information, welche ebenfalls in der Textnachricht enthalten sein kann, an einen Insassen des Fahrzeugs auszugeben, und eine Eingabeeinrichtung, um eine Antwort des Insassen zu erfassen. Dabei ist die Steuerung ausgestaltet, um über die Ausgabeeinrichtung eine Ausführung der Anwendung anzubieten und die Anwendung nur dann auszuführen, wenn die Steuerung vorher eine positive Bestätigung auf das Anbieten der Ausführung über die Eingabeeinrichtung erfasst hat.

Bei dieser Ausführungsform wird die an das Fahrzeug in Form der Textnachricht übertragene Information zuerst in Form der weiteren Information beispielsweise dem Fahrer des Fahrzeugs angezeigt. Der Fahrer des Fahrzeugs kann nun entscheiden, ob er die der Information entsprechende Anwendung ausführen möchte oder nicht. Entscheidet sich der Fahrer zur Ausführung der Anwendung, dann wird die Anwendung quasi mit Parametern gestartet, welche automatisch aus der Information entnommen werden. Es ist also vorteilhafterweise nicht erforderlich, dass der Fahrer einen dieser Parameter manuell eingibt.

Erfindungsgemäß ist es auch möglich, dass als Ausgabeeinrichtung und Eingabeeinrichtung das Mobilfunkgerät eingesetzt wird. In diesem Fall wird die weitere Information von dem Mobilfunkgerät aus der Textnachricht extrahiert und angezeigt. Auch die Antwort wird von dem Mobilgerät erfasst und ausgewertet. Dabei ist das Mobilfunkgerät ausgestaltet, um die Ausführung der Anwendung anzubieten und die Anwendung nur dann auszuführen, wenn das Mobilfunkgerät vorher eine positive Bestätigung auf das Anbieten der Ausführung erfasst hat. In diesem Fall sendet das Mobilfunkgerät, auf welchem eine entsprechende Applikation läuft, bei einer positiven Bestätigung entsprechende Steuerbefehle an die Steuerung. Demnach handelt es sich dabei auch um Varianten der verschiedenen erfindungsgemäßen Verfahren.

Zur Realisierung einer aufbereiteten Anzeige mit Hilfe der Ausgabeeinrichtung kann eine Webseite verwendet werden, um die in der Textnachricht enthaltene Information einem Benutzer anzuzeigen. Dies ist quasi eine Alternative zum Starten einer Applikation mittels des Hyperlinks. Bei dieser Alternative würde der entsprechende Link beispielsweise in Form einer Webseite dargestellt, welcher die darzustellende Information mittels Parametern übermittelt wird.

Gemäß einer erfindungsgemäßen Variante umfasst die Vorrichtung ein Infotainmentsystem. Dabei ist die Steuerung ausgestaltet, um bei der Durchführung der Anwendung die Information in dem Infotainmentsystem abzuspeichern.

Durch diese Variante ist es beispielsweise möglich, dass der Fahrer eines weiteren Fahrzeugs einen Radiosender oder einen bestimmten Musiktitel als die Information an das Fahrzeug übermittelt. Die Information wird automatisch in dem Infotainmentsystem des Fahrzeugs abgespeichert, so dass der Fahrer des Fahrzeugs (abhängig von einer Ja/Nein- Bestätigung) automatisch denselben Radiosender oder denselben Musiktitel wie der Fahrer des weiteren Fahrzeugs hören kann.

Die vorliegende Erfindung erweitert das Prinzip des Versendens bestimmter Fahrzeugzustände von einem Fahrzeug zu einem weiteren Fahrzeug. Dabei können mit dem jeweiligen Fahrzeug gekoppelte Mobilfunkgeräte als Mittel eingesetzt werden, um die Kommunikation zwischen den Fahrzeugen über verschiedene Standard-Nachrichtendienste zu realisieren. Indem die versendete Textnachricht (auch) eine maschinenlesbare Information umfasst, ist die erfindungsgemäße Vorrichtung innerhalb des empfangenden Fahrzeugs in der Lage, diese Information automatisch (ohne manuelle Umsetzung) weiterzuverarbeiten.

Für die vorliegende Erfindung können verschiedenste Kommunikationskanäle und/oder Kommunikationsmechanismen eingesetzt werden. Wird erfindungsgemäß die Textnachricht über ein Mobilfunkgerät empfangen oder versendet, ist die vorliegende Erfindung ohne Änderung auch für zukünftige Kommunikationsmechanismen, welche dann von dem Mobilfunkgerät zu unterstützen sind, anwendbar. Der Benutzer kann in diesem Fall selbst entscheiden, welchen Kommunikationsmechanismus er einsetzen möchte, um eine Textnachricht zu versenden oder zu empfangen.

Die vorliegende Erfindung ist insbesondere zum Einsatz bei Kraftfahrzeugen geeignet.

Selbstverständlich ist die vorliegende Erfindung nicht auf diesen bevorzugten Anwendungsbereich eingeschränkt, da die vorliegende Erfindung auch bei Schiffen, Flugzeugen sowie gleisgebundenen oder spurgeführten Fahrzeugen einsetzbar ist.

Darüber hinaus ist die vorliegende Erfindung nicht auf Fortbewegungsmittel beschränkt. Beispielsweise kann die Textnachricht von einem beliebigen (auch ortsfesten) Service-Provider versendet werden. Die versenden Textnachrichten müssen auch nicht genau einen Empfänger adressieren, sondern können, wenn dies der verwendete Kommunikationskanal zulässt, auch per Broadcast/Multicast an eine Empfängergruppe gesendet werden.

Das erfindungsgemäße Prinzip kann auch zur Kommunikation zwischen Unterhaltungselektronikkomponenten im Heimbereich eingesetzt werden. Beispielsweise könnte ein Fernseher mit einem Mobilgerät gekoppelt werden. Über eine auf dem Mobilfunkgerät laufende Applikation kann nun einem anderen Mobilfunkgerät, welches ebenfalls mit einem Fernseher gekoppelt ist, mittels eines Standard-Nachrichtendienstes z.B. das aktuelle Programm mitgeteilt werden. Das empfangende Mobilfunkgerät ist nun in der Lage, nach einer entsprechenden Bestätigung den mit ihm gekoppelten Fernseher anzuweisen, auf das übermittelte Programm umzuschalten. Ähnliche Anwendungsbeispiele sind für Satellitenreceiver, Radios und Streaming-Clients denkbar.

Dies ermöglicht folgende Einsatzbeispiele:
- Ein Geschäft informiert, beispielsweise in Form eines abonnierbaren Tweets, über eine Rabattaktion in einer bestimmten Filiale und hinterlegt in der versendeten Textnachricht die Anfahrposition dieser Filiale, welche dann z.B. vom empfangenden Mobilfunkgerät auf Wunsch als Fahrziel in das Navigationssystem des mit dem Mobilfunkgerät gekoppelten Fahrzeugs übernommen werden kann.
- Ein Wetterdienst informiert über Frost in der kommenden Nacht und hinterlegt in der Textnachricht die Möglichkeit, die Standheizung des Fahrzeugs zu einer bestimmten Uhrzeit am nächsten Morgen zu aktivieren.

Darüber hinaus ist es möglich, die Information direkt auf einer Webseite zu hinterlegen, was zu folgenden Einsatzmöglichkeiten führt:
- Ein Handbuch eines bestimmten Fahrzeugs wird auf einer Webseite angeboten und enthält die Möglichkeit, einzelne in dem Handbuch beschriebene Funktionen des Fahrzeugs unmittelbar auszuprobieren, indem die entsprechende Information beispielsweise in Form eines Hyperlinks selektiert wird.
- Auf einer Webseite wird über bestimmte Sehenswürdigkeiten informiert, wobei für jede Sehenswürdigkeit die Möglichkeit angeboten wird, ein der Sehenswürdigkeit entsprechendes Navigationsziel beispielsweise in Form eines Hyperlinks zu selektieren, um dadurch das Navigationsziel automatisch in das Navigationssystem des Fahrzeugs zu laden.

Im Folgenden wird die vorliegende Erfindung anhand bevorzugter erfindungsgemäßer Ausführungsformen mit Bezug zu den Figuren im Detail beschrieben.

In Fig. 1 wird das erfindungsgemäße Versenden einer Textnachricht von einem Fahrzeug an ein weiteres Fahrzeug dargestellt.

In Fig. 2 wird das Versenden und Empfangen einer Textnachricht anhand von zwei Varianten der vorliegenden Erfindung dargestellt.

Fig. 3 zeigt schematisch ein erfindungsgemäßes Fahrzeug mit einer erfindungsgemäßen Vorrichtung.

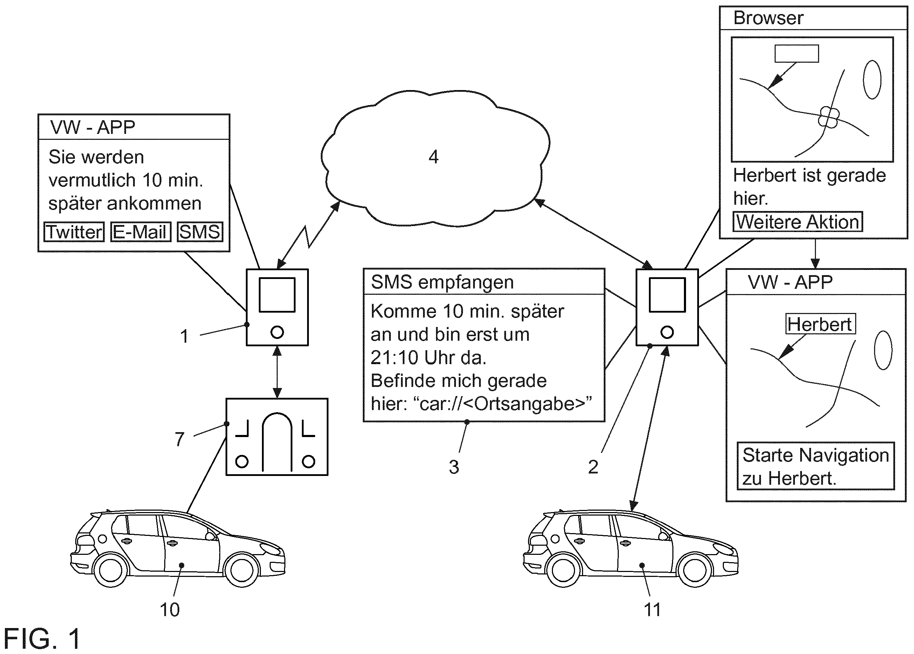

Das in Fig. 1 dargestellte erfindungsgemäße Fahrzeug 10 umfasst ein Infotainmentsystem 7, welches mit einem Mobilfunkgerät 1 gekoppelt ist. Dabei ist das Mobilfunkgerät 1 beispielsweise über Bluetooth, WLAN oder ein Kabel kommunikationstechnisch mit dem Infotainmentsystem 7 gekoppelt, so dass Daten zwischen dem Infotainmentsystem 7 und dem Mobilfunkgerät 1 ausgetauscht werden können.

Anstelle des Infotainmentsystems könnte die Kopplung zwischen dem Fahrzeug bzw. einer Komponente des Fahrzeugs und dem Mobilfunkgerät auch über eine separate Freisprecheinrichtung des Fahrzeugs oder über eine kommunikationstechnische Koppelvorrichtung (z.B einer Steckverbindung) zu dem Mobilfunkgerät in einer Armlehne des Fahrzeugs erfolgen.

Eine Applikation des Mobilfunkgeräts 1 erlaubt nun, dass bestimmte Daten, wie Ankunftszeit, Stauinformation, Restwegstrecke, Fahrtziel, Fahrzeugposition, die von dem Infotainmentsystem bereitgestellt werden, in eine Textnachricht umgesetzt werden. Die Applikation bietet dann die Möglichkeit, diese Textnachricht über verschiedene standardisierte Kommunikationsmechanismen über das Mobilfunknetz 4 zu versenden. Beispielsweise kann dadurch die Nachricht "Ich komme 10 Minuten später und bin erst um 21:10 Uhr da. Befinde mich gerade hier car://<Ortsangabe>" versendet werden, indem der Benutzer bzw. Fahrer nur den entsprechenden Knopf bzw. Button auf seinem Mobilfunkgerät 1 drückt. D.h. die Textnachricht 3 selbst zusammen mit der als Hyperlink bzw. URL kodierten Ortsangabe (aktuelle Position des versendenden Fahrzeugs 10) wird automatisch aus den entsprechenden Daten des Infotainmentsystem 7 erzeugt.

Diese Textnachricht 3 wird von dem Mobilfunkgerät 2 empfangen. Anschließend wird die Textnachricht in der üblichen Applikation des Mobilfunkgeräts 2 für den gewählten Kommunikationsmechanismus (z.B. WhatsApp) dargestellt. Der Hyperlink wird im dargestellten Text hervorgehoben, sofern auf dem empfangenden Mobilfunkgerät 2 für das entsprechende Protokoll eine Applikation registriert ist. Klickt der Benutzer auf diesen Hyperlink wird diese Applikation, welche z.B. eine spezielle Applikation des Fahrzeugherstellers sein kann, oder ein Webbrowser gestartet. Die in dem Hyperlink hinterlegte Information wird von der Applikation bzw. dem Webbrowser erfasst und interpretiert. Beispielsweise kann eine bestimmte in der Textnachricht übermittelte Position auf einer Karte dargestellt werden.

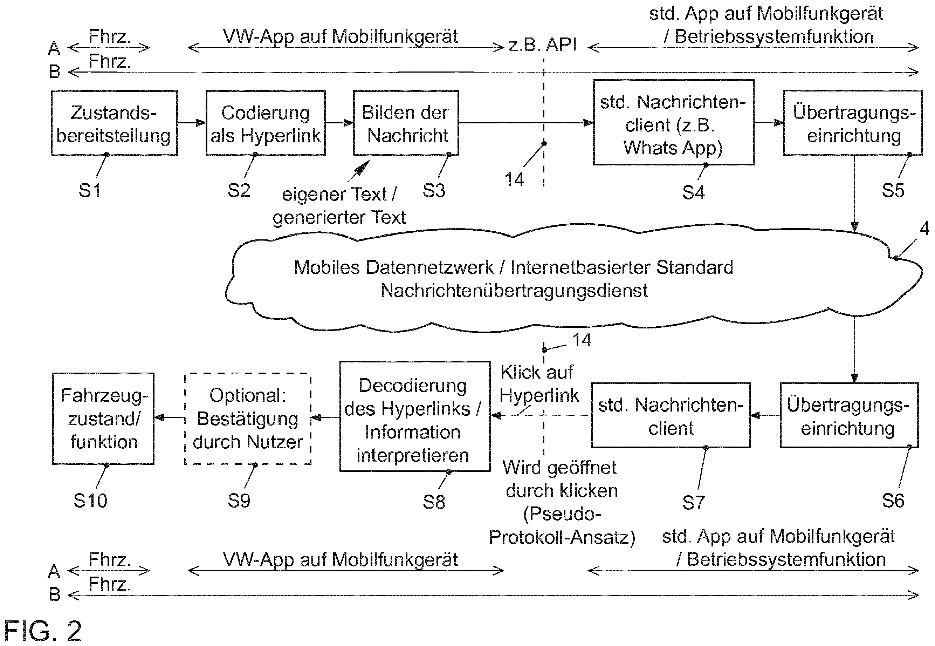

In Fig. 2 wird in einem ersten Schritt S1 ein bestimmter Zustand oder eine bestimmte Information eines Fahrzeugs bereitgestellt. Bei diesem Zustand oder bei dieser Information kann es sich beispielsweise um Fahrzeugdaten (d.h. im Fahrzeug gespeicherte Daten) oder auch Fahrtdaten handeln. Diese Information wird im zweiten Schritt S2 als Hyperlink kodiert, welcher dann im dritten Schritt S3 in eine Textnachricht eingebettet wird. Diese Textnachricht kann dabei vollständig oder teilweise automatisch generiert werden, aber auch Teile eines manuell erstellten Textes enthalten. Bei der ersten Variante A werden die Schritte S2 und S3 von einer speziellen Applikation durchgeführt, welche auf einem Mobilfunkgerät abläuft. Dagegen werden die Schritte S2 und S3 bei der zweiten Variante B von der erfindungsgemäßen Vorrichtung durchgeführt.

Bei der Variante A wird die Textnachricht mittels einer Programmschnittstelle 14 im Schritt S4 an eine Applikation übergeben, welche einen standardisierten Nachrichtendienst (z.B. WhatsApp) realisiert. Im Schritt S5 wird die Textnachricht mittels des standardisierten Nachrichtendienstes und mittels einer Übertragungsvorrichtung (des Mobilfunkgeräts oder der Vorrichtung) versendet. Während die Schritte S4 und S5 bei der Variante A von einer standardisierten Applikation des Mobilfunkgeräts bzw. von einer Betriebssystemfunktion des Mobilfunkgeräts durchgeführt werden, werden die Schritte S4 und S5 bei der Variante B von der erfindungsgemäßen Vorrichtung durchgeführt.

Über ein Mobilfunknetz 4 oder einen internetbasierten standardisierten Nachrichtenübertragungsdienst wird die Textnachricht zu einem Mobilfunkgerät innerhalb eines weiteren Fahrzeugs (Variante A) oder an eine erfindungsgemäße Vorrichtung in einem weiteren Fahrzeug (Variante B) gesendet, wo sie von der entsprechenden Übertragungsvorrichtung (des Mobilfunkgeräts oder der Vorrichtung) im Schritt S6 empfangen wird. Im Schritt S7 wird die Textnachricht mit dem Hyperlink mit Hilfe einer Applikation dargestellt, welche den standardisierten Nachrichtendienst realisiert. Wiederum werden die Schritte S6 und S7 bei der Variante A von einer standardisierten Applikation des Mobilfunkgeräts bzw. von einer Betriebssystemfunktion des Mobilfunkgeräts durchgeführt, während die Schritte S6 und S7 bei der Variante B von der erfindungsgemäßen Vorrichtung durchgeführt werden.

Durch einen Klick auf den Hyperlink wird eine durch den Hyperlink (z. B. mittels PseudoProtokoll-Ansatz) identifizierte Applikation im Schritt S8 gestartet, welche den Hyperlink dekodiert und eine durch den Hyperlink repräsentierte Information interpretiert. Optional nach einer durch den Benutzer (insbesondere den Fahrer des Fahrzeugs) getätigten Bestätigung (Schritt S9) wird abhängig von der Information ein Zustand des Fahrzeugs geändert oder eine Funktion des Fahrzeugs aktiviert. Bei der Variante A werden die Schritte S8 und S9 von einer speziellen Applikation, welche auf dem Mobilfunkgerät abläuft, durchgeführt. Dagegen werden bei der Variante B die Schritte S8 und S9 von der erfindungsgemäßen Vorrichtung ausgeführt. Bei der Variante B kann die Aktivierung des Hyperlinks und damit das Starten der durch den Hyperlink identifizierten Applikation auch automatisch (ohne dass ein Benutzer klicken muss) erfolgen.

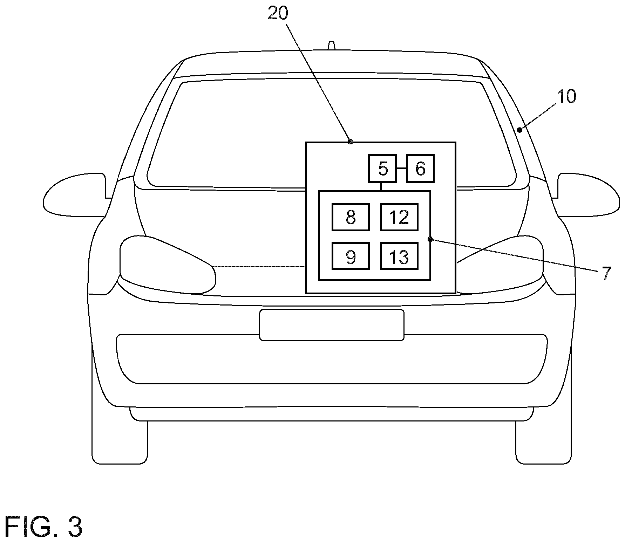

In Fig. 3 ist ein erfindungsgemäßes Fahrzeug 10 dargestellt, welches eine erfindungsgemäße Vorrichtung 20 umfasst. Dabei umfasst die erfindungsgemäße Vorrichtung 20 ihrerseits eine Steuerung 5, eine Kommunikationseinrichtung 6 und ein Infotainmentsystem 7. Das Infotainmentsystem umfasst eine Eingabeeinrichtung 8, eine Ausgabeeinrichtung 9, ein Navigationssystem 12 und ein Radio 13.

### Bezugszeichenliste

- 1,2: Mobilgerät
- 3: SMS
- 4: Mobilfunknetz
- 5: Steuerung
- 6: Kommunikationseinrichtung
- 7: Infotainmentsystem
- 8: Eingabeeinrichtung
- 9: Ausgabeeinrichtung
- 10, 11: Fahrzeug
- 12: Navigationssystem
- 13: Radio
- 14: Programmschnittstelle
- 20: Vorrichtung
- Sx: Verfahrensschritt

## Patentansprüche

1. Verfahren zur Kommunikation zwischen einem Sender (1; 2) in einem Fahrzeug (10) und einem weiteren Fahrzeug (11), wobei das Verfahren folgende Schritte umfasst:
Senden einer Information in Form einer Textnachricht (3) in maschinenlesbarer Form von dem Sender (1) an das weitere Fahrzeug (11),
Empfangen und Auswerten der Information von dem weiteren Fahrzeug (11), und
automatische Ausführung einer Anwendung des weiteren Fahrzeugs (11) abhängig von der Information,
wobei Fahrzeugdaten des Fahrzeugs (10) erfasst und als die Information versendet werden,
wobei die Fahrzeugdaten Einstellungsdaten und Konfigurationsdaten zur Einstellung bzw. Konfiguration eines Infotainmentsystems, einer Klimaanlage oder eines Sonnendachs des Fahrzeugs (10) umfassen.

2. Verfahren nach Anspruch 1,
**dadurch gekennzeichnet,**
**dass** die Information ferner eine Ortsangabe umfasst,
**dass** die Ortsangabe in einem Navigationssystem (12) des Fahrzeugs (11) abgespeichert wird, und
**dass** abhängig von dieser Ortsangabe eine Route für das Fahrzeug (11) bestimmt wird.

3. Verfahren nach Anspruch 1,
**dadurch gekennzeichnet,**
**dass** die Information ferner eine Senderangabe umfasst,
**dass** in einem Radio (13) des Fahrzeugs ein der Senderangabe entsprechender Radiosender eingeschaltet wird.

4. Verfahren nach einem der vorhergehenden Ansprüche,
**dadurch gekennzeichnet,**
**dass** das Senden der Information umfasst, dass die Information in Form eines Hyperlinks kodiert wird und dieser Hyperlink in die Textnachricht (3) eingebettet wird.

5. Verfahren zum Versenden einer Information eines Fahrzeugs (10),
wobei das Verfahren folgende Schritte umfasst,
• Erfassen einer Information des Fahrzeugs (10),
• Kodieren der Information in maschinenlesbarer Form in eine Textnachricht (3), und
• Versenden der Information mittels Mobilfunk an ein weiteres Fahrzeug (11),
**dadurch gekennzeichnet,**
**dass** Fahrzeugdaten des Fahrzeugs (10) erfasst und als die Information versendet werden,
wobei die Fahrzeugdaten Einstellungsdaten und Konfigurationsdaten zur Einstellung bzw. Konfiguration eines Infotainmentsystems, einer Klimaanlage oder eines Sonnendachs des Fahrzeugs (10) umfassen.

6. Verfahren zum Empfangen einer Information für ein Fahrzeug (11),
wobei das Verfahren folgende Schritte umfasst,
• Empfangen einer Textnachricht (3) mittels Mobilfunk,
• Dekodieren der Textnachricht (3), um die Information innerhalb der Textnachricht (3) zu erfassen, und
• Senden der Information an das Fahrzeug (11), um eine Anwendung des Fahrzeugs (11), abhängig von der Information durchzuführen,
wobei die Information Fahrzeugdaten eines weiteren Fahrzeugs (10) umfasst,
wobei die Fahrzeugdaten Einstellungsdaten und Konfigurationsdaten zur Einstellung bzw. Konfiguration eines Infotainmentsystems (7), einer Klimaanlage oder eines Sonnendachs des weiteren Fahrzeugs (10) umfassen.

7. Vorrichtung für ein Fahrzeug (11), welche eine Steuerung (5) umfasst,
wobei die Steuerung (5) ausgestaltet ist, um über eine Kommunikationseinrichtung (1; 2; 6) Textnachrichten zu empfangen,
wobei die Steuerung (5) ausgestaltet ist, um eine Information in Form einer Textnachricht (3) in maschinenlesbarer Form mit Hilfe der Kommunikationseinrichtung (1; 2; 6) zu empfangen und auszuwerten, und um abhängig von der Information eine Anwendung des Fahrzeugs (11) auszuführen,
wobei die Information Fahrzeugdaten eines weiteren Fahrzeugs (10) umfasst,
wobei die Fahrzeugdaten Einstellungsdaten und Konfigurationsdaten zur Einstellung bzw. Konfiguration eines Infotainmentsystems (7), einer Klimaanlage oder eines Sonnendachs des weiteren Fahrzeugs (10) umfassen.

8. Vorrichtung nach Anspruch 7,
**dadurch gekennzeichnet,**
**dass** die Steuerung (5) zusätzlich ausgestaltet ist, um über die Kommunikationseinrichtung (1; 2; 6) Textnachrichten zu senden,
**dass** die Steuerung (5) ausgestaltet ist, um die Information in Form der Textnachricht (3) in maschinenlesbarer Form mit Hilfe der Kommunikationseinrichtung (1; 2; 6) zu versenden.

9. Vorrichtung nach Anspruch 7 oder 8,
**dadurch gekennzeichnet,**
**dass** die Steuerung (5) eingerichtet ist, um durch die Ausführung der Anwendung eine Zustandsänderung des Fahrzeugs (10) zu bewirken.

10. Vorrichtung nach einem der Ansprüche 7-9,
**dadurch gekennzeichnet,**
**dass** die Steuerung (5) eingerichtet ist, um Fahrzeugdaten des Fahrzeugs (10; 11) und/oder Daten einer Fahrt des Fahrzeugs (10; 11) zu erfassen und als die Information in Form der Textnachricht zu versenden, und
**dass** die Steuerung(5) eingerichtet ist, um als die Information Fahrzeugdaten eines weiteren Fahrzeugs (11; 10) und/oder Daten einer Fahrt des weiteren Fahrzeugs (10; 11) zu empfangen und auszuwerten.

11. Vorrichtung nach einem der Ansprüche 7-10,
**dadurch gekennzeichnet,**
**dass** die Vorrichtung (20) eine Ausgabeeinrichtung (9) und eine Eingabeeinrichtung (8) umfasst, und
**dass** die Steuerung (5) ausgestaltet ist, um über die Ausgabeeinrichtung (9) eine Ausführung der Anwendung anzubieten und um die Anwendung nur auszuführen, wenn die Steuerung (5) eine positive Bestätigung auf das Anbieten der Ausführung über die Eingabeeinrichtung (8) erfasst hat.

12. Vorrichtung nach einem der Ansprüche 7-11,
**dadurch gekennzeichnet,**
**dass** die Vorrichtung (20) ein Infotainmentsystem (7) umfasst,
**dass** die Steuerung (5) ausgestaltet ist, um bei Durchführung der Anwendung die Information in dem Infotainmentsystem (7) abzuspeichern.

## Claims

1. Method for communicating between a transmitter (1; 2) in a vehicle (10) and a further vehicle (11), wherein the method comprises the following steps:
transmission of an item of information in the form of a text message (3) in machine-readable form from the transmitter (1) to the further vehicle (11),
reception and evaluation of the information by the further vehicle (11), and
automatic execution of an application of the further vehicle (11) on the basis of the information,
wherein vehicle data relating to the vehicle (10) are captured and are transmitted as the information,
wherein the vehicle data comprise setting data and configuration data for setting and configuring an infotainment system, an air-conditioning system or a sunroof of the vehicle (10).

2. Method according to Claim 1,
**characterized**
**in that** the information also comprises a location statement,
**in that** the location statement is stored in a navigation system (12) of the vehicle (11), and
**in that** a route for the vehicle (11) is determined on the basis of this location statement.

3. Method according to Claim 1,
**characterized**
**in that** the information also comprises a transmitter statement,
**in that** a radio station corresponding to the transmitter statement is switched on in a radio (13) of the vehicle.

4. Method according to one of the preceding claims, **characterized**
**in that** the transmission of the information comprises coding the information in the form of a hyperlink and embedding this hyperlink in the text message (3).

5. Method for transmitting an item of information relating to a vehicle (10),
wherein the method comprises the following steps of:
• capturing an item of information relating to the vehicle (10),
• coding the information in machine-readable form in a text message (3), and
• transmitting the information by means of mobile radio,
**characterized**
**in that** vehicle data relating to the vehicle (10) are captured and are transmitted as the information, wherein the vehicle data comprise setting data and configuration data for setting and configuring an infotainment system, an air-conditioning system or a sunroof of the vehicle (10).

6. Method for receiving an item of information for a vehicle (11),
wherein the method comprises the following steps of:
• receiving a text message (3) by means of mobile radio,
• decoding the text message (3) in order to capture the information inside the text message (3), and
• transmitting the information to the vehicle (11) in order to execute an application of the vehicle (11) on the basis of information,
wherein the information comprises vehicle data relating to a further vehicle (10),
wherein the vehicle data comprise setting data and configuration data for setting and configuring an infotainment system (7), an air-conditioning system or a sunroof of the further vehicle (10).

7. Apparatus for a vehicle (11), which apparatus comprises a controller (5),
wherein the controller (5) is configured to receive text messages via a communication device (1; 2; 6),
wherein the controller (5) is configured to receive an item of information in the form of a text message (3) in machine-readable form with the aid of the communication device (1; 2; 6) and to evaluate said information and to execute an application of the vehicle (11) on the basis of the information,
wherein the information comprises vehicle data relating to a further vehicle (10),
wherein the vehicle data comprise setting data and configuration data for setting and configuring an infotainment system (7), an air-conditioning system or a sunroof of the further vehicle (10).

8. Apparatus according to Claim 7,
**characterized**
**in that** the controller (5) is additionally configured to transmit text messages via the communication device (1; 2; 6),
**in that** the controller (5) is configured to transmit the information in the form of the text message (3) in machine-readable form with the aid of the communication device (1; 2; 6).

9. Apparatus according to Claim 7 or 8,
**characterized**
**in that** the controller (5) is configured to cause a state change of the vehicle (10) by executing the application.

10. Apparatus according to one of Claims 7-9, **characterized**
**in that** the controller (5) is configured to capture vehicle data relating to the vehicle (10; 11) and/or data relating to a journey of the vehicle (10; 11) and to transmit said data as the information in the form of the text message, and
**in that** the controller (5) is configured to receive and evaluate, as the information, vehicle data relating to a further vehicle (11; 10) and/or data relating to a journey of the further vehicle (10; 11) .

11. Apparatus according to one of Claims 7-10, **characterized**
**in that** the apparatus (20) comprises an output device (9) and an input device (8), and
**in that** the controller (5) is configured to offer execution of the application via the output device (9) and to execute the application only if the controller (5) has captured a positive confirmation in response to the offer of the execution via the input device (8).

12. Apparatus according to one of Claims 7-11, **characterized**
**in that** the apparatus (20) comprises an infotainment system (7),
**in that** the controller (5) is configured to store information in the infotainment system (7) when executing the application.

## Revendications

1. Procédé de communication entre un émetteur (1 ; 2) dans un véhicule (10) et un autre véhicule (11), le procédé comprenant les étapes suivantes consistant à :
envoyer une information sous la forme d'un message texte (3) sous une forme lisible par machine de l'émetteur (1) à l'autre véhicule (11),
recevoir et évaluer l'information provenant de l'autre véhicule (11), et
exécuter automatiquement une application de l'autre véhicule (11) en fonction de l'information,
des données de véhicule du véhicule (10) étant détectées et envoyées comme information,
les données de véhicule comprenant des données de réglage et des données de configuration pour régler ou configurer un système d'infodivertissement, un système de climatisation ou un toit ouvrant du véhicule (10).

2. Procédé selon la revendication 1, **caractérisé**
**en ce que** l'information comprend en outre une indication de localisation,
**en ce que** l'indication de localisation est enregistrée dans un système de navigation (12) du véhicule (11), et
**en ce qu'**un itinéraire est déterminé pour le véhicule (11) en fonction de cette indication de localisation.

3. Procédé selon la revendication 1, **caractérisé**
**en ce que** l'information comprend en outre une indication d'émetteur,
**en ce que** dans une radio (13) du véhicule, une station radio correspondant à l'indication d'émetteur est réglée selon l'indication d'émetteur.

4. Procédé selon l'une quelconque des revendications précédentes, **caractérisé en ce que** l'envoi de l'information comprend le codage de l'information sous la forme d'un hyperlien et l'incorporation dudit hyperlien dans le message texte (3).

5. Procédé d'envoi d'une information d'un véhicule (10), le procédé comprenant les étapes suivantes consistant à
• détecter une information du véhicule (10),
• coder l'information sous une forme lisible par machine dans un message texte (3), et
• envoyer l'information au moyen d'une radiocommunication mobile,
**caractérisé en ce que** des données de véhicule du véhicule (10) sont détectées et sont envoyées comme information,
les données de véhicule comprenant des données de réglage et des données de configuration pour régler ou configurer un système d'infodivertissement, un système de climatisation ou un toit ouvrant du véhicule (10).

6. Procédé de réception d'une information pour un véhicule (11), le procédé comprenant les étapes suivantes consistant à
• recevoir un message texte (3) au moyen d'une radiocommunication mobile,
• décoder le message texte (3) pour détecter l'information à l'intérieur du message texte (3), et
• envoyer l'information au véhicule (11) pour exécuter une application du véhicule (11) en fonction de l'information,
l'information comprenant des données de véhicule d'un autre véhicule (10),
les données de véhicule comprenant des données de réglage et des données de configuration pour régler ou configurer un système d'infodivertissement (7), un système de climatisation ou un toit ouvrant de l'autre véhicule (10).

7. Dispositif pour un véhicule (11) qui comprend un système de commande (5),
le système de commande (5) étant conçu pour recevoir des messages texte par l'intermédiaire d'un dispositif de communication (1 ; 2 ; 6),
le système de commande (5) étant conçu pour recevoir et évaluer une information sous la forme d'un message texte (3) sous une forme lisible par machine à l'aide du dispositif de communication (1 ; 2 ; 6), et pour exécuter une application du véhicule (11) en fonction de l'information,
l'information comprenant des données de véhicule d'un autre véhicule (10),
les données de véhicule comprenant des données de réglage et des données de configuration pour régler ou configurer un système d'infodivertissement (7), un système de climatisation ou un toit ouvrant de l'autre véhicule (10).

8. Dispositif selon la revendication 7, **caractérisé**
**en ce que** le système de commande (5) est en outre conçu pour envoyer des messages texte par l'intermédiaire du dispositif de communication (1 ; 2 ; 6),
**en ce que** le système de commande (5) est conçu pour envoyer l'information sous la forme du message texte (3) sous une forme lisible par machine à l'aide du dispositif de communication (1 ; 2 ; 6).

9. Dispositif selon la revendication 7 ou 8, **caractérisé en ce que** le système de commande (5) est aménagé pour provoquer par l'exécution de l'application un changement d'état du véhicule (10).

10. Dispositif selon l'une quelconque des revendications 7 à 9, **caractérisé**
**en ce que** le système de commande (5) est aménagé pour détecter des données de véhicule du véhicule (10 ; 11) et/ou des données d'un trajet du véhicule (10 ; 11) et pour les envoyer comme information sous la forme d'un message texte, et
**en ce que** le système de commande (5) est aménagé pour recevoir et évaluer comme information des données de véhicule d'un autre véhicule (11 ; 10) et/ou des données d'un trajet de l'autre véhicule (10 ; 11).

11. Dispositif selon l'une quelconque des revendications 7 à 10, **caractérisé**
**en ce que** le dispositif (20) comprend un dispositif de sortie (9) et un dispositif d'entrée (8), et
**en ce que** le système de commande (5) est conçu pour proposer par l'intermédiaire du dispositif de sortie (9) une exécution de l'application et pour exécuter l'application uniquement si le système de commande (5) a détecté par l'intermédiaire du dispositif d'entrée (8) une confirmation positive suite à la proposition de l'exécution.

12. Dispositif selon l'une quelconque des revendications 7 à 11, **caractérisé**
**en ce que** le dispositif (20) comprend un système d'infodivertissement (7),
**en ce que** le système de commande (5) est conçu pour enregistrer l'information dans le système d'infodivertissement (7) lors de l'exécution de l'application.
